# EUROPÄISCHE PATENTSCHRIFT

(11) **EP 4 548 082 B1**
(45) Veröffentlichungstag und Bekanntmachung des Hinweises auf die Patenterteilung: **10.06.2026**
(21) Anmeldenummer: 23814145.1
(22) Anmeldetag: 27.11.2023
(51) Int. Cl.: G01N 21/90, B07C 5/342, B07C 5/36, G01N 21/952

(54) **PRÜFVORRICHTUNG**
TEST DEVICE
DISPOSITIF DE TEST

(30) Priorität: 18.01.2023 DE 102023101162
(43) Veröffentlichungstag der Anmeldung: 07.05.2025
(73) Patentinhaber: INTRAVIS Gesellschaft für Lieferungen und Leistungen von bildgebenden und bildverarbeitenden Anlagen und Verfahren mbH, 52068 Aachen (DE)
(72) Erfinder: FUHRMANN, Gerd, 52066 Aachen (DE); RICK, Michael, 52064 Aachen (DE)
(74) Vertreter: Kohlmann, Kai
(86) Internationale Anmeldenummer: PCT/EP2023/083153
(87) Internationale Veröffentlichungsnummer: WO 2024/153371

(56) Entgegenhaltungen:
- EP-A1- 1 205 745
- CN-A- 114 839 201
- DE-A1- 3 346 129
- US-A1- 2008 257 795
- US-A1- 2016 023 397
- US-A1- 2018 246 043
- US-A1- 2022 281 154

## Beschreibung

Die Erfindung betrifft eine Vorrichtung zur optischen Prüfung von Merkmalen von länglichen, rotationssymmetrischen Objekten, nämlich Vorformlingen, umfassend eine geneigte Platte mit einem oberen und einem unteren Rand, wobei die Neigung derart bestimmt wird, dass sich die zu prüfenden Objekte aufgrund der auf sie wirkenden Schwerkraft vom oberen zum unteren Rand auf der Platte bewegen.

Bei den zu prüfenden Objekten handelt es sich um Vorformlinge, aus denen im Blasformverfahren Behälter, z.B. Flaschen, hergestellt werden. Um fehlerhafte Vorformlinge nach Möglichkeit vor dem Blasformprozess auszusondern, kommen kamerabasierte Vorrichtungen zur optischen Prüfung, auch als Inspektionssysteme bezeichnet, zum Einsatz, die eine umfassende Prüfung von Vorformlingen ermöglichen.

Typische Fehler an Vorformlingen sind unter anderem Trübungen, Verunreinigungen, Einschlüsse, nicht geschmolzene Stellen, Blasen, Brandflecken, fehlerhafte Farben, fehlerhafte Abmessungen und/oder Formen und fehlerhafte Anspritzpunkte.

Aus der EP 2 976 204 B1 ist bereits ein Verfahren und eine entsprechende Vorrichtung zur Prüfung der Farbbeschaffenheit von Vorformlingen bekannt, in welcher die Vorformlinge durch eine Transporteinrichtung in ein Aufnahmegefäß transportiert werden. Die Vorformlinge werden beim Verlassen der Transporteinrichtung ungeordnet in das Aufnahmegefäß eingeleitet, wobei ein Bild mittels der Bildaufnahmeeinrichtung zwischen dem Verlassen der Transporteinrichtung und dem Aufnahmegefäß gemacht wird. Das Bild wird durch eine Verarbeitungseinrichtung derart verarbeitet, dass die Farbbeschaffenheit der Vorformlinge überprüft und in der Farbbeschaffenheit fehlerhafte Vorformlinge entdeckt werden. In einer Ausführungsform der bekannten Vorrichtung rutschen die Vorformlinge nach dem Verlassen der Transporteinrichtung über eine Platte in das Aufnahmegefäß. Die Platte positioniert die Vorformlinge gegenüber der Bildaufnahmeeinrichtung in einer Ebene, ohne dass besondere Ausrichtungsvorrichtungen verwendet werden müssen. Außerdem dient die Platte als Hintergrund in den Aufnahmen, so dass eine optimale Auswertung der Bilder ermöglicht wird. Insbesondere hat diese Platte eine Farbe, welche einen guten Kontrast zur Farbe der Vorformlinge aufweist.

Die bekannte Vorrichtung erlaubt lediglich eine optische Prüfung der Farbbeschaffenheit von Vorformlingen, während diese entlang der geneigten Platte zwischen der Transporteinrichtung und dem Aufnahmegefäß rutschen.

Aus der EP 1 205 745 A1 ist eine Sortiervorrichtung zur optischen Prüfung von durchsichtigem oder transparentem Sortiergut bekannt, das mittels einer nachgeordneten Trenneinrichtung in unterschiedliche Fraktionen sortiert werden soll. Zum Erfassen von Objekten des Materialstroms werden mehrere nebeneinander angeordnete Zeilenkameras offenbart, deren Erfassungsbereiche sich in der Ebene eines Anlagenabschnittes überlappen. Die einzelnen Zeilenkameras erfassen die durch das Vorbeigleiten des Objekts bedingten Modifikation des von Dioden emittierten Lichtes und geben Aufschluss über verschiedene Eigenschaften des Objektes, wie Materialzusammensetzung, Farbe, Größe oder dergleichen. Ein vom Erkennungsprozess jeder einzelnen Kamera gesteuertes Signal regelt schließlich die nachgeordnete Trenneinrichtung.

Die US 2018/246043 A1 beschreibt ein Prüfverfahren und System zur Qualitätskontrolle von Werkstücken, wie z. B. PET-Vorformlingen. Während des Transports werden Bilder der Objekte aufgenommen und auf Fehler untersucht.

Die US 2008/257795 A1 offenbart eine Vorrichtung, die sensorgesteuert mittels Auswurffingern elektrisch detektierte Metallgegenstände aussortiert. Bei den Sensoren handelt es sich typischerweise um induktive Sensoren, die Metalle von Nichtmetallen unterscheiden. Soweit andere Materialien detektiert und aussortiert werden sollen, können andere Sensoren vorgesehen sein. Jeder Auswurffinger wird jeweils durch einen einzelnen Sensor angesteuert. Das Steuersystem sendet entweder ein zeitgesteuertes Signal an den entsprechenden Auswurffinger im Sortiersystem, um das Material auszuschleusen, oder es tut nichts und lässt das Material an den Auswurffingern vorbeifallen.

Die Aufgabe der Erfindung besteht darin, eine kompakte, sich problemlos in die Anlagenumgebung einer Spritzgussmaschine integrierbare Vorrichtung zu schaffen, die abhängig von dem Prüfungsergebnis, das nicht auf die Überprüfung der Farbbeschaffenheit von Vorformlingen beschränkt ist, gezielt einzelne, insbesondere fehlerhafte Objekte aussondern kann.

Diese Aufgabe wird erfindungsgemäß durch eine Vorrichtung mit den Merkmalen des Anspruchs 1 gelöst. Vorteilhafte Ausgestaltungen ergeben sich aus den Merkmalen der Unteransprüche.

Die erfindungsgemäße Vorrichtung dient der optischen Prüfung von Merkmalen von länglichen, rotationssymmetrischen Objekten, nämlich von Vorformlingen. Die Vorrichtung ist im Produktstrom hinter einer Spritzgussmaschine angeordnet und erlaubt es den überwiegenden Anteil der von der Spritzgussmaschine hergestellten Objekte im unorientierten Objektstrom zu prüfen, zu bewerten und fehlerhafte Objekte auszuschleusen.

Die erfindungsgemäße Vorrichtung umfasst als wesentliche Komponenten eine geneigte Platte, am unteren Rand der geneigten Platte angeordnete, mit Antrieben versehene Auswurffinger sowie mehrere auf die geneigte Platte ausgerichtete Bildaufnahmeeinrichtungen, insbesondere digitale Kameras. Die vorgenannten Komponenten lassen sich problemlos in die bestehende Anlagenumgebung einer Spritzgussmaschine aufgrund ihrer kompakten Abmessungen integrieren.

Die Neigung der Platte wird derart bestimmt, dass sich die Objekte aufgrund der auf sie wirkenden Schwerkraft vom oberen zum unteren Rand der Platte bewegen. Abhängig von der Neigung und Lage der als Schüttgut am oberen Rand auf die Platte aufgegebenen Objekte rutschen oder rollen diese zu prüfenden Objekte über die Oberfläche der Platte in Richtung des unteren Randes der Platte.

Die schwenkbeweglich am unteren Rand der Platte parallel nebeneinander angeordneten Auswurffinger sind aus einer übereinstimmenden Ausgangsposition in eine Auswurfposition verschwenkbar. Die Teilung zwischen den nebeneinander angeordneten Auswurffingern ist auf den Durchmesser der zu prüfenden Objekte abgestimmt. Die vorzugsweise ebenen Oberflächen sämtlicher Auswurffinger schließen in der Ausgangsposition mit der Oberfläche der geneigten Platte einen Winkel von mindestens 180 ° ein. Vorzugsweise beträgt der Winkel exakt 180 °, sodass die Oberflächen der Auswurffinger in der Ausgangsposition eine Fortsetzung der ebenen, geneigten Platte bilden.

Jeder Auswurffinger verfügt über einen gesonderten Antrieb, um den jeweiligen Auswurffinger zwischen der Ausgangsposition und der Auswurfposition zu verschwenken, wobei in der Auswurfposition der zwischen der Oberfläche der geneigten Platte und der Oberfläche der Auswurffinger eingeschlossene Winkel kleiner als 180° ist.

Die mehreren auf die geneigte Platte ausgerichteten Bildaufnahmeeinrichtungen, deren Blickwinkel die Platte zumindest über deren gesamte Breite erfassen, tragen zu der geringen Baugröße der Vorrichtung und der einfachen Integration in die Anlagenumgebung der Spritzgießmaschine bei. Die mehreren Bildaufnahmeeinrichtungen nehmen mit übereinstimmender Frequenz zu unterschiedlichen Zeitpunkten synchron jeweils mehrere digitale Bilder der sich auf der Platte bewegenden Objekte auf. Aufgrund der angestrebten geringen Länge der geneigten Platte ist es erforderlich, dass die Bilder mit hoher Frequenz, in einem Bereich zwischen 50 Hz - 100 Hz, vorzugsweise mit einer Frequenz oberhalb von 70 Hz aufgenommen werden. Die durch die hohe Frequenz mögliche geringe Länge der geneigten Platte trägt zu einem geringen Höhenverlust im Transportstrom der zu prüfenden Objekte und damit zu einem geringen Platzbedarf der Vorrichtung bei. Eine Verarbeitungseinheit, beispielsweise ein Personal Computer oder ein verteiltes System, d. h. eine Datenverarbeitungsumgebung, in der sich unterschiedliche Komponenten auf mehrere Computer in einem Netzwerk verteilen, ist derart programmiert, um in den zu den unterschiedlichen Zeitpunkten synchron aufgenommenen digitalen Bildern sämtliche vollständig abgebildeten Objekte zu erkennen, jedes erkannte Objekt durch Vergleich mit einem Referenzobjekt auf mindestens ein Merkmal zu prüfen, jedes erkannte Objekt zu verfolgen und zu berechnen, zu welchem Zeitpunkt und in welcher Drehlage jedes erkannte Objekt eine Position im Bereich der Auswurffinger erreichen wird, wobei abhängig von dieser Berechnung und dem Ergebnis der Prüfung des mindestens einen Merkmals gezielt der Antrieb eines oder mehrerer Auswurffinger betätigt wird, um das erkannte Objekt auszuwerfen.

Die Drehlage beschreibt die Orientierung der zu prüfenden Objekte auf der Oberfläche der geneigten Platte und den Auswurffingern, insbesondere durch einen Drehwinkel einer erkannten Achse des Objektes zu einer Achse in einem Bezugssystem. Die erkannte Achse kann beispielsweise die Längsachse des Vorformlings sein.

Die Berechnung der Zeitpunkte, wann ein erkanntes und nachverfolgtes Objekt eine bestimmte Position erreicht hat, wird modelliert. Die Modellierung kann beispielsweise auf dem Bewegungsmodell der konstanten Beschleunigung ausgehend von einer angenommenen Anfangsgeschwindigkeit jedes Objektes bei Überleitung auf die geneigte Platte basieren. Die angenommene Anfangsgeschwindigkeit orientiert sich beispielsweise an der Transportgeschwindigkeit eines Stetigförderers, der die zu prüfenden Objekte am oberen Rand auf die geneigte Platte überleitet. Bei der Modellierung werden die in den zu unterschiedlichen Zeitpunkten aufgenommenen Bildern erkannte Position, die Drehlage und die zu dem Aufnahmezeitpunkt ermittelte Geschwindigkeit des erkannten Objektes berücksichtigt. Die Erkennung übereinstimmender Objekte in den aufgenommenen Bildern erfolgt mit Hilfe eines Algorithmus durch Vergleich mit einem Referenzobjekt der zu prüfenden Objekte. Bei dem Vergleich werden nur solche Objekte verwendet, die vollständig erkennbar sind. Liegen beispielsweise mehrere Objekte in dem Bild dicht aneinander und können daher nicht vollständig erkannt werden, werden diese Objekte ausgefiltert.

Um die als Schüttgut vorliegenden Objekte, nämlich Vorformlinge, der geneigten Platte einlagig zuzuführen, umfasst die Vorrichtung in einer Ausgestaltung der Erfindung einen Bandförderer mit einer Bandübergabe, die derart oberhalb des oberen Randes der geneigten Platte angeordnet ist, dass die zu prüfenden Objekte von dem Bandförderer auf die geneigte Platte gelangen. Die Vorformlinge werden auf dem Bandförderer aus der Spritzgussmaschine transportiert. An die Bandübergabe am Ende des Bandförderers schließt sich die geneigte Platte vorzugsweise derart an, dass die Vorformlinge möglichst nicht auf die Platte fallen, sondern nahezu tangential übergeben werden.

Die geneigte Platte hat einen Neigungswinkel gegenüber der Horizontalen zwischen 30° bis 40°, vorzugsweise von 35°. Bei einem derartigen Neigungswinkel rutschen die im Querschnitt runden Vorformlinge überwiegend entlang der Platte vom oberen in Richtung des unteren Randes. Ein flacherer Winkel von weniger als 30° führt dazu, dass quer liegende Vorformlinge rollen und sich durch den in Richtung der Längsachse variierenden Durchmesser der Vorformlinge auf dem Weg vom oberen zum unteren Rand der geneigten Platte je nach Drehlage entweder stark in Richtung der linken oder rechten Seite der geneigten Platte bewegen, was die Nachverfolgung der Vorformlinge in den zu unterschiedlichen Zeitpunkten aufgenommenen Bildern erschwert.

Die Transportgeschwindigkeit der Vorformlinge auf dem Bandförderer ist vorzugsweise um den Faktor 2 kleiner als die mittlere Transportgeschwindigkeit jedes sich auf der geneigten Platte vom oberen zum unteren Rand bewegenden Vorformlings. Die Vorformlinge werden auf dem Bandförderer aus der Spritzgussmaschine üblicherweise mit einer Geschwindigkeit von 0,16m/s bis 0,5m/s transportiert. Die mittlere Geschwindigkeit der Vorformlinge auf einer Platte mit einem Neigungswinkel von 35° liegt etwa bei 1 -1,25m/s.

Dieser Faktor bzw. diese Geschwindigkeitsdifferenzen können durch Einstellen der Förderbandgeschwindigkeit und /oder Änderung des Neigungswinkels der Platte unter Berücksichtigung der Geometrie und des Gewichts der Vorformlinge eingestellt werden. Der genannte Faktor bewirkt, dass die zu prüfenden Vorformlinge während der Bewegung auf der Oberfläche der geneigten Platte beschleunigt werden, wodurch sich der Abstand zwischen den zu prüfenden Vorformlingen vergrößert. Die Vereinzelung der zu prüfenden Vorformlinge erhöht die Anzahl der vollständig in den aufgenommenen Bildern erkennbaren Vorformlinge. In den Bildern liegen wenige oder keine Vorformlinge mehr dicht aneinander, so dass der überwiegende Teil der in den Bildern erfassten Vorformlinge vollständig erkannt wird.

Die nicht aus der Ausgangsposition ausgelenkten Auswurffinger bilden eine Verlängerung der Oberfläche der geneigten Platte, über die Vorformlinge zu einem unterhalb des unteren Randes der geneigten Platte angeordneten Förderband geleitet werden, welches die nicht ausgeworfenen Vorformlinge abtransportiert. Die nicht ausgeworfenen Vorformlinge gleiten über das äußere Ende der nicht ausgelenkten Auswurffinger und fallen auf das Förderband.

Die als fehlerhaft erkannten Vorformlinge werden zu dem Zeitpunkt, in dem sie eine Position im Bereich der Auswurffinger erreichen, abhängig von der Drehlage des fehlerhaften Vorformlings von einem oder mehreren der Auswurffinger ausgeworfen.

Die Vorrichtung umfasst vorzugsweise eine sich zumindest über die Breite der geneigten Platte erstreckende Fanghaube und einen Querförderer, wobei die Fanghaube und der Querförderer derart zu den Auswurffingern angeordnet sind, dass die ausgeworfenen Vorformlinge entweder direkt auf den Querförderer oder nach Umlenkung durch die Fanghaube auf den Querförderer gelangen.

Um Reflektionen auf den zu prüfenden Vorformlingen bei der Aufnahme der Bilder mit den Bildaufnahmeeinrichtungen zu vermeiden, besteht die geneigte Platte vorzugsweise aus einem transparenten Material, z.B. Glas, wobei auf einer Rückseite der transparenten Platte eine Hintergrundbeleuchtung angeordnet ist. Die Hintergrundbeleuchtung ist vorzugsweise eingerichtet, Beleuchtungsblitze mit einer Frequenz zu erzeugen, die mit der Aufnahmefrequenz der Bildaufnahmeeinrichtungen übereinstimmt, wobei die Erzeugung der Beleuchtungsblitze mit den Aufnahmezeitpunkten der Bildaufnahmeeinrichtungen synchronisiert ist. Grundsätzlich kann die Hintergrundbeleuchtung jedoch auch als permanente Beleuchtung ausgeführt sein.

Um die Vorformlinge auf der gesamten Breite der geneigten Platte zu erfassen, werden mehrere Bildaufnahmeeinrichtungen, beispielsweise drei digitale Kameras, in einer Reihe nebeneinander angeordnet. Damit ein Vorformling unabhängig von seiner Drehlage stets in mindestens einem aufgenommenen Bild vollständig zu erkennen ist, überlappen sich die Blickfelder der mehreren Bildaufnahmeeinrichtungen in Richtung der Breite der Platte derart, dass die Überlappung größer als die Länge der zu prüfenden Vorformlinge ist. Durch die Überlappung ist sichergestellt, dass auch ein quer auf der Oberfläche liegender Vorformling stets vollständig in dem Bild erkennbar ist. Führungen auf der geneigten Platte, die die Vorformlinge entsprechend der jeweiligen Blickfelder der Bildaufnahmeeinrichtungen separieren, sind dadurch entbehrlich.

Das Vorsehen einer größeren Anzahl von Bildaufnahmeeinrichtungen trägt dazu bei, dass die Breite der geneigten Platte an die Breite des die zu prüfenden Vorformlinge zuführenden Bandförderers angepasst werden kann, ohne dass der Abstand der Bildaufnahmeeinrichtungen zu der geneigten Platte und dadurch die Bauhöhe der Vorrichtung vergrößert werden müsste. Da ein und derselbe Vorformling im Überlappungsbereich von zwei Bildaufnahmeeinrichtungen gleichzeitig erfasst und verfolgt werden kann, muss dies bei der Verarbeitung der Bilddaten berücksichtigt und korrigiert werden, um diesen Vorformling nicht doppelt zu verfolgen.

Grundsätzlich ist es jedoch auch möglich, die zu einem Zeitpunkt von den mehreren Kameras aufgenommenen Bilder zu einem Gesamtbild zusammenzufassen. Um die damit verbundenen höheren Rechenzeiten bzw. Rechnerkapazitäten zu vermeiden, ist die Überlappung der Blickwinkel der mehreren Kameras vorteilhaft.

Um beim Auswerfen fehlerhafter Vorformlinge eine hohe Geschwindigkeit der angesprochenen Auswurffinger zu gewährleisten, ist in einer vorteilhaften Ausgestaltung der Erfindung jeder Auswurffinger endseitig als um eine Drehachse drehbar gelagerter, an einer Oberseite ebener Hebel mit einer an einer Unterseite angeordneten Anlenkung für ein Abtriebsglied des Antriebs ausgeführt, wobei die Anlenkung ausgehend von der Drehachse in der ersten Hälfte des Hebels angeordnet ist. Durch den geringen Abstand zwischen Drehachse und Anlenkung ergibt sich ein großer Hebelweg bei einer geringen Bewegung des Abtriebsglieds.

Die Länge sämtlicher Auswurffinger ist auf die Länge der zu prüfenden Vorformlinge derart abgestimmt, dass sie mindestens der halben Länge jedes zu prüfenden Vorformlings entspricht. Für das erfolgreiche Auswerfen ist es ausreichend, den Mittelpunkt der Längsachse des Vorformlings in der zweiten Hälfte des Auswurffingers ausgehend von der Drehachse zu treffen, besonders bevorzugt jedoch in einem Abstand von einem dreiviertel der Länge des Auswurffingers von der Drehachse. Wenn dieser bevorzugte Abstand durch Ungenauigkeiten, ungünstige Drehlagen und Verzögerungen nicht genau getroffen wird, hilft die vorgesehene Toleranz den Vorformling gleichwohl erfolgreich auszuwerfen.

Um mit der Vorrichtung unterschiedliche Arten von Vorformlingen, die unterschiedliche Abmessungen und/oder ein unterschiedliches Gewicht aufweisen, zuverlässig prüfen und auswerfen zu können, ist der Schwenkwinkel zwischen der Ausgangsposition und der Auswurfposition jedes Auswurffingers einstellbar.

Jeder Antrieb für einen der Auswurffinger umfasst vorzugsweise einen doppelt wirkenden Pneumatikzylinder und eine Steuerung, wobei die Steuerung derart eingerichtet ist, dass der Kolben mit der Kolbenstange mit ungedrosseltem Luftdruck ausfahrbar und die Ansteuerzeit des Luftdrucks einstellbar ist. Über die Ansteuerzeiten der Ventile für die Freigabe des Luftdrucks lässt sich der Weg der pneumatischen Zylinder und damit der Schwenkwinkel jedes Auswurffingers beeinflussen. In jedem Fall wird die Ansteuerzeit so kurz gewählt, dass der Kolben mit der Kolbenstange jedes pneumatischen Zylinders nicht in seine äußere Endlage fährt, um den Pneumatikzylinder vor Beschädigungen zu schützen. Das ungedrosselte Ausfahren ist erforderlich, um als fehlerhaft erkannten Vorformlingen den notwendigen Impuls beim Auswerfen zu geben. Der Rückhub des doppelt wirkenden Pneumatikzylinders kann indes gedrosselt erfolgen.

Nachfolgend wird die Erfindung anhand der Zeichnungen näher erläutert. Es zeigen:
- **Figur 1**: eine schematische Darstellung einer erfindungsgemäßen Vorrichtung,
- **Figur 2**: eine perspektivische Teilansicht einer erfindungsgemäßen Vorrichtung, jedoch ohne Darstellung der Fanghaube,
- **Figur 3**: eine schematische Darstellung der Anordnung von mehreren Bildaufnahmeeinrichtungen einer erfindungsgemäßen Vorrichtung,
- **Figur 4**: eine Detaildarstellung von Auswurffingern,
- **Figuren 5a** - **d**: Aufsichten auf einen Teil der nebeneinander angeordneten Auswurffinger einer erfindungsgemäßen Vorrichtung.

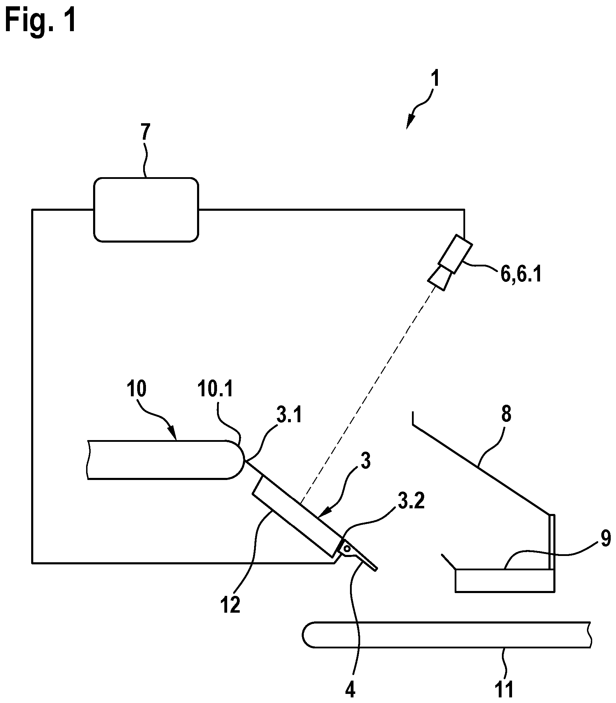

Figur 1 zeigt eine erfindungsgemäße Vorrichtung 1 zur optischen Prüfung von Merkmalen von länglichen rotationssymmetrischen Objekten 2, nämlich Vorformlingen 2.1. Die Vorrichtung 1 umfasst als wesentliche Komponenten eine geneigte Platte 3 mit einem oberen und einem unteren Rand 3.1, 3.2, die eine Neigung von 35° zur Horizontalen aufweist, sodass sich die Vorformlinge 2.1 aufgrund der auf sie wirkenden Schwerkraft vom oberen Rand 3.1 zum unteren Rand 3.2 bewegen, insbesondere rutschen.

Ein Bandförderer 10 fördert die Vorformlinge 2.1 von der in Figur 1 nicht dargestellten Spritzgussmaschine zu der geneigten Platte 3 der erfindungsgemäßen Vorrichtung 1. Der Bandförderer verfügt über eine Bandübergabe 10.1, die oberhalb des oberen Rands 3.1 der geneigten Platte 3 angeordnet ist und führt die zu prüfenden Vorformlinge 2.1 der geneigten Platte 3 einlagig zu.

Die Förderbandgeschwindigkeit des Bandförderers 10 ist maximal halb so groß, wie die mittlere Transportgeschwindigkeit jedes sich auf der geneigten Platte 3 vom oberen zum unteren Rand 3.1, 3.2 bewegenden Vorformlings 2.1, sodass es bei der Überleitung der Vorformlinge 2.1 von dem Bandförderer 10 auf die geneigte Platte 3 zu einer Abstandsvergrößerung zwischen den Vorformlingen infolge der Beschleunigung kommt.

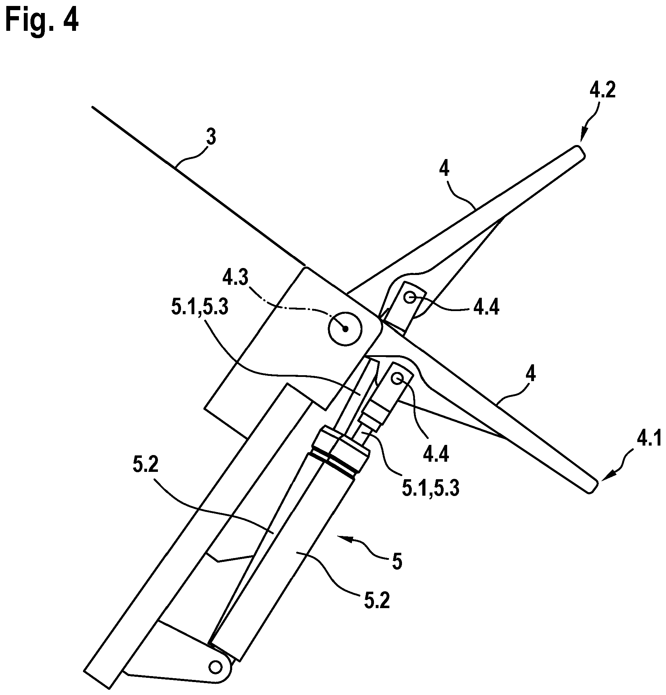

Am unteren Rand 3.2 der geneigten Platte 3 sind parallel nebeneinander Auswurffinger 4 angeordnet, die aus einer übereinstimmenden Ausgangsposition 4.1 in eine Auswurfposition 4.2 verschwenkbar sind, wie dies insbesondere in Figur 4 erkennbar ist. In der Ausgangsposition 4.1 schließen die ebenen Oberflächen sämtlicher Auswurffinger 4 mit der ebenen Oberfläche der geneigten Platte 3 einen Winkel von 180 ° ein und bilden damit eine Fortsetzung der geneigten Platte 3.

Wie weiter aus der Detaildarstellung in Figur 4 erkennbar, verfügt jeder Auswurffinger 4 über einen gesonderten Antrieb 5 mit einem Abtriebsglied 5.1. Der Antrieb 5 ist im dargestellten Ausführungsbeispiel ein doppeltwirkender Pneumatikzylinder 5.2 mit einem Kolben und einer abtriebsseitigen Kolbenstange 5.3.

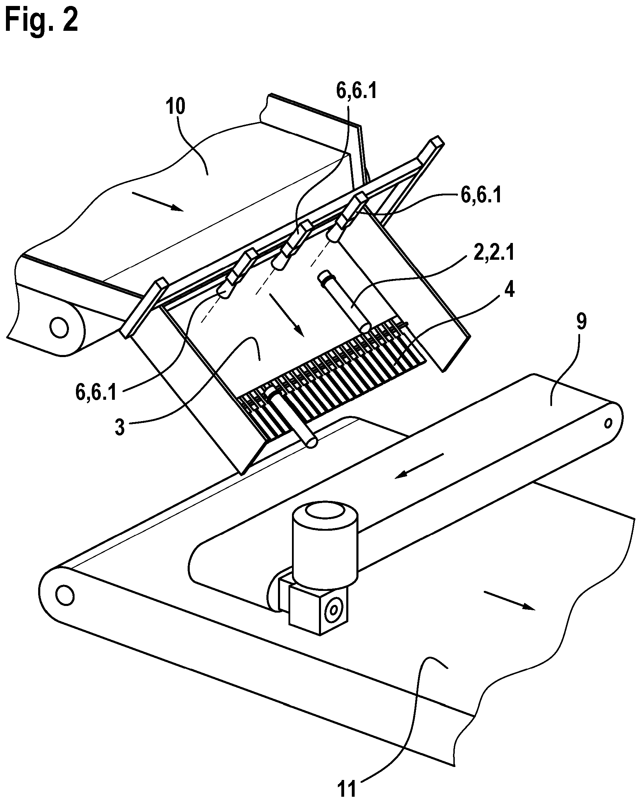

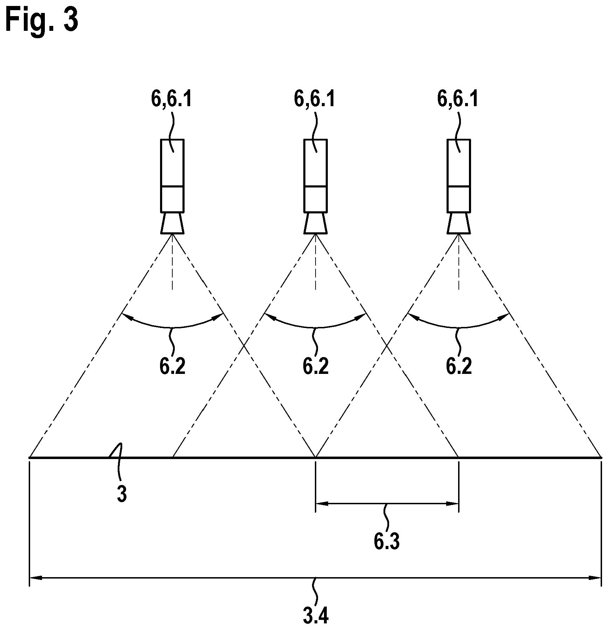

Weiter verfügt die Vorrichtung 1 über mehrere auf die geneigte Platte 3 ausgerichtete Bildaufnahmeeinrichtungen 6, die im dargestellten Ausführungsbeispiel als digitale Kameras 6.1 ausgeführt sind. Wie insbesondere aus der perspektivischen Darstellung in Figur 2 in Verbindung mit der Aufsicht in Figur 3 erkennbar, erfassen die Blickwinkel 6.2 der drei nebeneinander angeordneten digitalen Kameras 6.1 die geneigte Platte 3 zumindest über deren gesamte Breite 3.4. Bei den digitalen Kameras 6.1 handelt es sich um Hochfrequenzkameras, die mit einer übereinstimmenden Frequenz, im Ausführungsbeispiel von 72 Hz, zu unterschiedlichen Zeitpunkten synchron jeweils drei digitale Bilder der sich auf der Platte bewegenden Vorformlinge 2.1 aufnehmen.

Die Blickwinkel 6.2 der drei nebeneinander angeordneten digitalen Kameras 6.1 überlappen sich in Richtung der Breite 3.4 der geneigten Platte 3 derart, dass die Überlappung 6.3 größer ist, als die Länge der jeweils zu prüfenden Vorformlinge 2.1. Durch die Überlappung 6.3 wird bewirkt, dass jeder Vorformling 2.1 unabhängig von seiner Drehlage 2.2 stets in mindestens einem zu einem Zeitpunkt von den mehreren digitalen Kameras 6.1 aufgenommenen Bild vollständig zu erkennen ist (vgl. Figur 3).

Um Reflektionen der Beleuchtung auf den zu prüfenden Vorformlingen 2.1 bei der Aufnahme der Bilder mit den drei digitalen Kameras 6.1 zu vermeiden, besteht die geneigte Platte 3 aus Glas und verfügt auf der Rückseite über eine Hintergrundbeleuchtung 12, die Beleuchtungsblitze mit einer Frequenz erzeugt, die mit der Aufnahmefrequenz der drei digitalen Kameras 6.1 übereinstimmt. Die Erzeugung der Beleuchtungsblitze ist mit den Aufnahmezeitpunkten der digitalen Kameras 6.1 synchronisiert.

Eine schematisch, lediglich in Figur 1 dargestellte Verarbeitungseinheit 7 ist derart programmiert, um in den zu unterschiedlichen Zeitpunkten synchron aufgenommenen digitalen Bildern sämtliche vollständig abgebildeten Vorformlinge 2.1 zu erkennen, jeden erkannten Vorformling 2.1 durch Vergleich mit einem Referenzobjekt auf mindestens ein Merkmal, beispielsweise die Abmessungen und/oder Form und/oder Farbe, zu prüfen, wobei die Merkmalsprüfung nur in einem Satz der von den digitalen Kameras 6.1 aufgenommenen Bildern erfolgen muss, jeden erkannten Vorformling 2.1 zu verfolgen und zu berechnen, zu welchem Zeitpunkt und in welcher Drehlage jeder erkannte Vorformling 2.1 eine Position im Bereich der Auswurffinger 4 erreichen wird.

Abhängig von dieser Berechnung durch die Verarbeitungseinheit 7 und dem Ergebnis der Prüfung des mindestens einen Merkmals wird der Pneumatikzylinder 5.2 eines oder mehrerer der Auswurffinger 4 betätigt, um den im Rahmen der Merkmalsprüfung als fehlerhaft erkannten Vorformling 2.1 auszuwerfen.

Über die Breite der geneigten Platte 3 erstreckt sich eine Fanghaube 8 (vgl. Figur 1). Des Weiteren befindet sich unter der Fanghaube 8 ein Querförderer 9 zum Abfördern der als fehlerhaft erkannten Vorformlinge 2.1. Die Fanghaube 8 und der Querförderer 9 sind derart zu den Auswurffingern 4 angeordnet, dass die ausgeworfenen Vorformlinge 2.1 entweder direkt auf den Querförderer 9 oder nach Umlenkung durch die Fanghaube 9 auf den Querförderer 9 gelangen und abtransportiert werden. Die Transportrichtung des Querförderers verläuft rechtwinklig zu der Transportrichtung des Bandförderers 10.

Um beim Auswerfen fehlerhafter Vorformlinge 2.1 eine hohe Geschwindigkeit der angesprochenen Auswurffinger 4 zu gewährleisten, ist jeder Auswurffinger 4, wie in Figur 4 erkennbar, endseitig um eine Drehachse 4.3 drehbar gelagert, wobei eine Anlenkung 4.4 für das äußere Ende der Kolbenstange 5.3 in der ersten Hälfte des Auswurffingers 4 angeordnet ist. Durch den geringen Abstand zwischen der Drehachse 4.3 und der Anlenkung 4.4 ergibt sich ein großer Hebelweg bei einer relativ geringen Bewegung der Kolbenstange 5.3. Der in der Bildebene vordere Auswurffinger befindet sich in der Ausgangsposition 4.1, der in der Bildebene hintere Auswurffinger in der Auswurfposition 4.2.

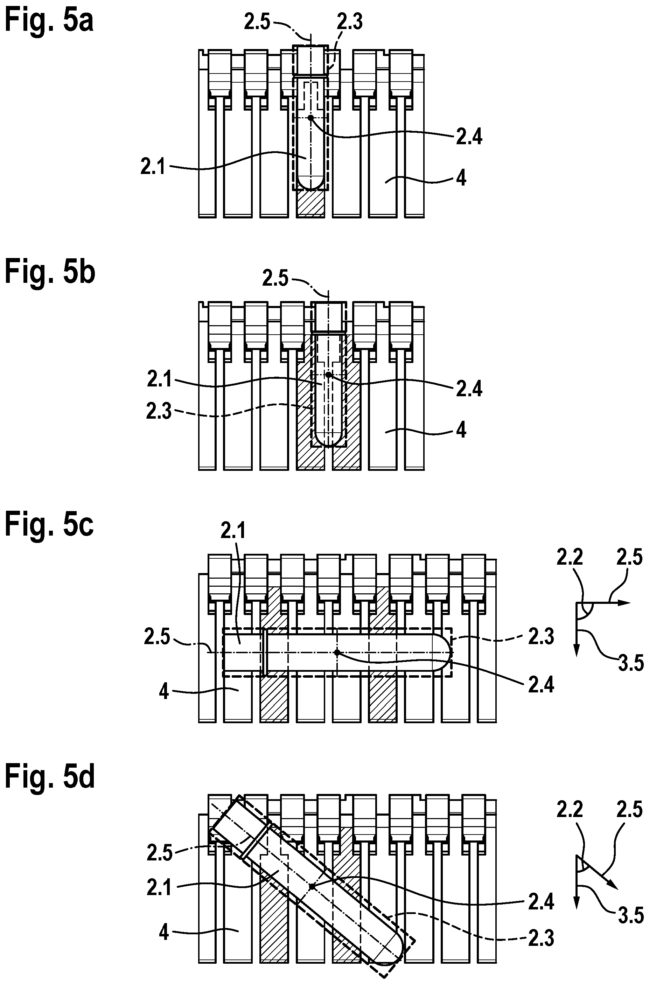

Nachfolgend wird die Ansteuerung der Auswurffinger 4 durch Beaufschlagen der Pneumatikzylinder 5.2 unter Berücksichtigung unterschiedlicher Drehlagen 2.2 der auszuwerfenden Vorformlinge 2.1 anhand der Darstellungen in Figur 5a - 5d erläutert.

In den Darstellungen sind die in dem Bild vollständig erkannten Vorformlinge 2.1 von einem Kasten 2.3 eingerahmt, der den Vorformling 2.1 bündig umgibt. Der Mittelpunkt 2.4 der Längsachse 2.5 des Kastens 2.3 wird als geometrischer Mittelpunkt des erkannten Vorformlings 2.1 betrachtet. Nachfolgend wird der Einfachheit halber die Längsachse 2.5 des Kastens 2.3 und der Mittelpunkt 2.4 der Längsachse 2.5 mit der Längsachse und dem Mittelpunkt des erkannten Vorformlings 2.1 gleichgesetzt.

Figur 5a zeigt einen als fehlerhaft erkannten Vorformling 2.1, dessen Längsachse 2.5 parallel zu den Auswurffingern 4 verläuft. Der Vorformling 2.1 befindet sich oberhalb genau eines Auswurffingers 4, dessen Pneumatikzylinder 5.2 angesteuert wird, um den als fehlerhaft erkannten Vorformling 2.1 auszuwerfen. Die Ansteuerung des Auswurffingers 4 erfolgt, wenn sich der Mittelpunkt 2.4 der Längsachse 2.5 in der zweiten Hälfte des Auswurffingers 4 ausgehend von dessen Drehachse 4.3 befindet.

Figur 5b zeigt einen als fehlerhaft erkannten Vorformling 2.1, dessen Längsachse 2.5 parallel zu den Auswurffingern 4 verläuft. Der Vorformling 2.1 befindet sich oberhalb von zwei Auswurffingern 4, deren Pneumatikzylinder 5.2 angesteuert werden, um den als fehlerhaft erkannten Vorformling 2.1 auszuwerfen. Die Ansteuerung der beiden Auswurffinger 4 erfolgt, wenn sich der Mittelpunkt 2.4 der Längsachse 2.5 in der zweiten Hälfte der beiden Auswurffinger 4 ausgehend von deren Drehachsen 4.3 befindet.

Figur 5c zeigt einen als fehlerhaft erkannten Vorformling 2.1, mit einer Drehlage 2.2, bei der die Längsachse 2.5 um einen Drehwinkel von 90° zu einer senkrechten Achse 3.5. eines Bezugssystems verdreht ist. Der Vorformling 2.1 befindet sich oberhalb von sieben Auswurffingern 4. Die Längsachse 2.5 wird in vier gleichlange Abschnitte eingeteilt. Die beiden Punkte auf der Längsachse 2.5 bei ¼ und ¾ der Länge des Kastens 2.3 lösen die Ansteuerung der zu den beiden Punkten nächstliegenden Auswurffinger 4 aus.

Figur 5d zeigt einen als fehlerhaft erkannten Vorformling 2.1, mit einer Drehlage 2.2, bei der die Längsachse 2.5 um einen Drehwinkel von 45° zu einer senkrechten Achse 3.5. eines Bezugssystems verdreht ist. Der Vorformling 2.1 befindet sich oberhalb von sieben Auswurffingern 4. Die Längsachse 2.5 wird in vier gleichlange Abschnitte eingeteilt. Die beiden Punkte auf der Längsachse 2.5 bei ¼ und ¾ der Länge des Kastens 2.3 lösen die Ansteuerung der zu den beiden Punkten nächstliegenden Auswurffinger 4 aus.

### Bezugszeichenliste

| | |
|---|---|
| 1 | Vorrichtung |
| 2 | Objekte |
| 2.1 | Vorformlinge |
| 2.2 | Drehlage |
| 2.3 | Kasten |
| 2.4 | Mittelpunkt |
| 2.5 | Längsachse |
| 3 | Geneigte Platte |
| 3.1 | Oberer Rand |
| 3.2 | Unterer Rand |
| 3.3 | Neigungswinkel |
| 3.4 | Breite |
| 3.5 | Senkrechte Achse |
| 4 | Auswurffinger |
| 4.1 | Ausgangsposition |
| 4.2 | Auswurfposition |
| 4.3 | Drehachse |
| 4.4 | Anlenkung |
| 4.5 | Teilung |
| 5 | Antrieb |
| 5.1 | Abtriebsglied |
| 5.2 | Pneumatikzylinder |
| 5.3 | Kolbenstange |
| 6 | Bildaufnahmeeinrichtung |
| 6.1 | Digitale Kamera |
| 6.2 | Blickwinkel |
| 6.3 | Überlappung |
| 6.4 | Halterung |
| 7 | Verarbeitungseinheit |
| 8 | Fanghaube |
| 9 | Querförderer |
| 10 | Bandförderer (Zufuhr) |
| 10.1 | Bandübergabe |
| 11 | Bandförderer (Abtransport) |
| 12 | Hintergrundbeleuchtung |

## Patentansprüche

1. Vorrichtung (1) zur optischen Prüfung von Merkmalen von länglichen, rotationssymmetrischen Objekten (2), nämlich von Vorformlingen (2.1) umfassend
1.1 eine geneigte Platte (3) mit einem sich über die Breite der Platte (3) erstreckenden oberen und einem unteren Rand (3.1, 3.2), wobei die Neigung derart bestimmt wird, dass sich die Objekte (2) aufgrund der auf sie wirkenden Schwerkraft vom oberen zum unteren Rand (3.1, 3.2) auf der Platte (3) bewegen,
1.2 schwenkbeweglich am unteren Rand (3.2) der Platte (3) parallel nebeneinander angeordnete Auswurffinger(4), die aus einer übereinstimmenden Ausgangsposition (4.1) in eine Auswurfposition (4.2) verschwenkbar sind,
1.3 wobei die Oberflächen sämtlicher Auswurffinger (4) in der Ausgangsposition (4.1) mit der Oberfläche der geneigten Platte (3) einen Winkel von mindestens 180 ° einschließen,
1.4 einen gesonderten Antrieb (5) für jeden Auswurffinger(4), eingerichtet um den jeweiligen Auswurffinger (4) zwischen der Ausgangsposition (4.1) und der Auswurfposition (4.2) zu verschwenken, wobei in der Auswurfposition (4.2) der zwischen der Oberfläche der geneigten Platte (3) und der Oberfläche der Auswurffinger (4) eingeschlossene Winkel kleiner 180° ist,
1.5 mehrere auf die geneigte Platte (3) ausgerichtete Bildaufnahmeeinrichtungen (6), wobei die Blickwinkel (6.2) der mehreren Bildaufnahmeeinrichtungen (6) die geneigte Platte (3) zumindest über deren gesamte Breite (3.4) erfassen und die mehreren Bildaufnahmeeinrichtungen (6) eingerichtet sind, mit übereinstimmender Frequenz in einem Bereich zwischen 50 Hz - 100 Hz zu unterschiedlichen Zeitpunkten synchron jeweils mehrere digitale Bilder der sich auf der geneigten Platte (3) bewegenden Objekte (2) aufzunehmen,
1.6 eine Verarbeitungseinheit (7), die derart programmiert ist, um in den zu den unterschiedlichen Zeitpunkten synchron aufgenommenen digitalen Bildern sämtliche vollständig abgebildeten Objekte (2) zu erkennen, jedes erkannte Objekt (2) durch Vergleich mit einem Referenzobjekt auf mindestens ein Merkmal zu prüfen, jedes erkannte Objekt (2) zu verfolgen und zu berechnen, zu welchem Zeitpunkt und in welcher Drehlage (2.2) jedes erkannte Objekt (2) eine Position im Bereich der Auswurffinger (4) erreichen wird, wobei abhängig von dieser Berechnung und dem Ergebnis der Prüfung des mindestens einen Merkmals gezielt der Antrieb (5) eines oder mehrerer Auswurffinger(s) (4) betätigt wird, um das erkannte Objekt (2) auszuwerfen.

2. Vorrichtung (1) nach Anspruch 1, weiter umfassend einen Bandförderer (10) mit einer Bandübergabe (10.1), die derart oberhalb des oberen Rands (3.1) der geneigten Platte (3) angeordnet ist, dass die Objekte (2) von dem Bandförderer (10) auf die geneigte Platte (3) gelangen.

3. Vorrichtung (1) nach Anspruch 2, **dadurch gekennzeichnet, dass** die Förderbandgeschwindigkeit derart einstellbar ist, dass die Transportgeschwindigkeit der Objekte (2) auf dem Bandförderer (10) mindestens um den Faktor 2 kleiner als die mittlere Transportgeschwindigkeit jedes sich auf der geneigten Platte (3) vom oberen zum unteren Rand (3.1, 3.2) bewegenden Objektes (2) ist.

4. Vorrichtung (1) nach einem der Ansprüche 1 bis 3, **dadurch gekennzeichnet, dass** unterhalb des unteren Randes (3.2) der geneigten Platte (3) ein weiterer Bandförderer (11) angeordnet ist, eingerichtet um die nicht ausgeworfenen Objekte (2) abzutransportieren.

5. Vorrichtung (1) nach einem der Ansprüche 1 bis 4 weiter umfassend eine sich zumindest über die Breite (3.4) der geneigten Platte (3) erstreckende Fanghaube (8) und einen Querförderer (9), wobei die Fanghaube (8) und der Querförderer (9) derart zu den Auswurffingern (4) angeordnet sind, dass die ausgeworfenen Objekte (2) entweder direkt auf den Querförderer (9) oder nach Umlenkung durch die Fanghaube (8) auf den Querförderer (9) gelangen.

6. Vorrichtung (1) nach einem der Ansprüche 1 bis 5, **dadurch gekennzeichnet, dass** der Neigungswinkel (3.3) der geneigten Platte (3) gegenüber der Horizontalen zwischen 30° und 40° beträgt.

7. Vorrichtung (1) nach einem der Ansprüche 1 bis **6,dadurch gekennzeichnet, dass** die geneigte Platte (3) aus einem transparenten Material besteht und auf einer Rückseite der Platte eine Hintergrundbeleuchtung (12) angeordnet ist.

8. Vorrichtung (1) nach Anspruch 7, **dadurch gekennzeichnet, dass** die Hintergrundbeleuchtung (12) eingerichtet ist, Beleuchtungsblitze mit einer Frequenz zu erzeugen, die mit der Aufnahmefrequenz der Bildaufnahmeeinrichtungen (6) übereinstimmt und die Erzeugung der Beleuchtungsblitze mit den Aufnahmezeitpunkten der Bildaufnahmeeinrichtungen synchronisiert ist.

9. Vorrichtung (1) nach einem der Ansprüche 1 bis 8, **dadurch gekennzeichnet, dass** sich die Blickwinkel (6.2) der mehreren Bildaufnahmeeinrichtungen (6) in Richtung der Breite (3.4) der geneigten Platte (3) derart überlappen, dass die Überlappung größer als die Länge der zu prüfenden Objekte (2) ist.

10. Vorrichtung (1) nach einem der Ansprüche 1 bis 9, **dadurch gekennzeichnet, dass** jeder Auswurffinger (4) endseitig als um eine Drehachse (4.3) drehbar gelagerter, an einer Oberseite ebener Hebel mit einer an einer Unterseite angeordneten Anlenkung (4.4) für ein Abtriebsglied (5.1) des Antriebs (5) ausgeführt ist, wobei die Anlenkung (4.4) ausgehend von der Drehachse (4.3) in der ersten Hälfte des Hebels angeordnet ist.

11. Vorrichtung (1) nach Anspruch 10, **dadurch gekennzeichnet, dass** die Länge jedes Hebels auf die Länge der Objekte (2) derart abgestimmt ist, dass sie mindestens der halben Länge jedes zu prüfenden Objekts (2) entspricht.

12. Vorrichtung (1) nach einem der Ansprüche 1 bis 11, **dadurch gekennzeichnet, dass** der Schwenkwinkel zwischen der Ausgangsposition (4.1) und der Auswurfposition (4.2) jedes Auswurffingers (4) einstellbar ist.

13. Vorrichtung (1) nach einem der Ansprüche 1 bis 12, **dadurch gekennzeichnet, dass** jeder Antrieb (5) einen doppelt wirkenden Pneumatikzylinder (5.2) mit einem Kolben und einer Kolbenstange (5.3) sowie eine Steuerung umfasst, wobei die Steuerung derart eingerichtet ist, dass der Kolben mit der Kolbenstange (5.3) mit ungedrosseltem Luftdruck ausfahrbar und die Ansteuerzeit des Luftdrucks einstellbar ist.

## Claims

1. Device (1) for optical testing of features of elongated, rotationally symmetrical objects (2), specifically preforms (2.1), comprising:
1.1 an inclined plate (3) with an upper and a lower edge (3.1, 3.2) extending over the width of the plate (3), wherein the inclination is determined such that the objects (2) move on the plate (3) from the upper to the lower edge (3.1, 3.2) due to the force of gravity acting upon them;
1.2 ejection fingers (4) arranged parallel to one another and pivotable at the lower edge (3.2) of the plate (3), which are pivotable from a corresponding starting position (4.1) to an ejection position (4.2);
1.3 wherein the surfaces of all the ejection fingers (4) in the starting position (4.1) enclose an angle of at least 180° with the surface of the inclined plate (3);
1.4 a separate drive (5) for each ejection finger (4), adapted to pivot the respective ejection finger (4) between the starting position (4.1) and the ejection position (4.2), wherein in the ejection position (4.2) the angle enclosed between the surface of the inclined plate (3) and the surface of the ejection fingers (4) is less than 180°,
1.5 several image acquisition devices (6) directed towards the inclined plate (3), wherein the viewing angles (6.2) of the several image acquisition devices (6) capture the inclined plate (3) at least over its entire width (3.4) and the several image acquisition devices (6) are adapted to synchronously capture several digital images of the objects (2) moving on the inclined plate (3) at different times at the same frequency in a range between 50 Hz-100 Hz,
1.6 a processing unit (7) programmed to recognize all fully depicted objects (2) in the digital images synchronously captured at the different times, to check each recognized object (2) for at least one feature by comparison with a reference object, to track each recognized object (2) and to calculate at what time and in what rotational position (2.2) each recognized object (2) reaches a position in the area of the ejection fingers (4), whereby, depending on this calculation and the result of the examination of at least one feature, the drive (5) of one or more ejection fingers (4) is selectively actuated in order to eject the recognized object (2).

2. Device (1) according to Claim 1, further comprising a belt conveyor (10) with a belt transfer (10.1) arranged above the upper edge (3.1) of the inclined plate (3) such that the objects (2) are transferred from the belt conveyor (10) to the inclined plate (3).

3. Device (1) according to Claim 2, **characterized in that** the conveyor belt speed is adjustable such that the transport speed of the objects (2) on the belt conveyor (10) is at least a factor of 2 less than the average transport speed of each object (2) moving on the inclined plate (3) from the upper to the lower edge (3.1, 3.2).

4. Device (1) according to one of Claims 1 to 3, **characterized in that** a further belt conveyor (11) is arranged below the lower edge (3.2) of the inclined plate (3), designed to remove the non-ejected objects (2).

5. Device (1) according to one of Claims 1 to 4 further comprising a catch hood (8) extending at least over the width (3.4) of the inclined plate (3) and a transverse conveyor (9), wherein the catch hood (8) and the transverse conveyor (9) are arranged with respect to the ejection fingers (4) such that the ejected objects (2) are either transferred directly onto the cross conveyor (9) or after being deflected by the catch hood (8) onto the cross conveyor (9).

6. Device (1) according to one of Claims 1 to 5, **characterized in that** the angle of inclination (3.3) of the inclined plate (3) with respect to the horizontal is between 30° and 40°.

7. Device (1) according to one of Claims 1 to 6, **characterized in that** the inclined plate (3) consists of a transparent material and a background lighting (12) is arranged on a back side of the plate.

8. Device (1) according to Claim 7, **characterized in that** the background lighting (12) is configured to generate flashes of light at a frequency that corresponds to the recording frequency of the image acquisition devices (6) and the generation of the flashes of light is synchronized with the recording times of the image acquisition devices.

9. Device (1) according to one of Claims 1 to 8, **characterized in that** the viewing angles (6.2) of the multiple image acquisition devices (6) overlap in the direction of the width (3.4) of the inclined plate (3) such that the overlap is greater than the length of the objects (2) to be tested.

10. Device (1) according to one of claims 1 to 9, **characterized in that** each ejection finger (4) is designed at its end as a lever rotatably mounted about an axis of rotation (4.3), which is flat on a top side and has a linkage (4.4) arranged on a bottom side for an output member (5.1) of the drive (5), wherein the linkage (4.4) is arranged in the first half of the lever starting from the axis of rotation (4.3).

11. Device (1) according to Claim 10, **characterized in that** the length of each lever is matched to the length of the objects (2) such that it corresponds to at least half the length of each object (2) to be tested.

12. Device (1) according to one of Claims 1 to 11, **characterized in that** the pivot angle between the starting position (4.1) and the ejection position (4.2) of each ejection finger (4) is adjustable.

13. Device (1) according to one of Claims 1 to 12, **characterized in that** each drive (5) comprises a double-acting pneumatic cylinder (5.2) with a piston and a piston rod (5.3) and a control, wherein the control is arranged such that the piston with the piston rod (5.3) can be extended with unrestricted air pressure and the actuation time of the air pressure is adjustable.

## Revendications

1. Dispositif (1), destiné à l'inspection visuelle de caractéristiques d'objets (2) allongés, symétriques en rotation, à savoir de préformes (2.1), comprenant
1.1 une plaque (3) inclinée, pourvue d'un bord (3.1, 3.2) supérieur et inférieur, s'étendant sur la largeur de la plaque (3), l'inclinaison étant déterminée de telle sorte que, du fait de la force de gravité agissant sur eux, les objets (2) se déplacent du bord (3.1, 3.2) supérieur vers l'inférieur sur la plaque (3),
1.2 des doigts d'éjection (4), placés côte à côte à la parallèle, de manière déplaçable en pivotement sur le bord (3.2) inférieur de la plaque (3), qui sont susceptibles de pivoter à partir d'une position de départ (4.1) concordante dans une position d'éjection (4.2),
1.3 dans la position de départ (4.1), les surfaces de l'ensemble des doigts d'éjection (4) incluant avec la surface de la plaque (3) inclinée un angle d'au moins 180 °,
1.4 un entraînement (5) séparé pour chaque doigt d'éjection (4), configuré pour faire pivoter le doigt d'éjection (4) concerné entre la position de départ (4.1) et la position d'éjection (4.2), dans la position d'éjection (4.2), l'angle inclus entre la surface de la plaque (3) inclinée et la surface des doigts d'éjection (4) étant inférieur à 180°,
1.5 plusieurs systèmes d'enregistrement d'images (6) orientés sur la plaque (3) inclinée, les angles de vision (6.2) des plusieurs systèmes d'enregistrement d'images (6) détectant la plaque (3) inclinée au moins sur l'ensemble de la largeur (3.4) de celle-ci et les plusieurs systèmes d'enregistrement d'images (6) étant configurés pour enregistrer avec une fréquence concordante, dans une plage comprise entre 50 Hz et 100 Hz, de manière synchrone à différents moments chaque fois plusieurs images numériques des objets (2) qui se déplacent sur la plaque (3) inclinée,
1.6 une unité de traitement (7), qui est programmée de sorte à reconnaître dans les images numériques enregistrées, de manière synchrone à différents moments l'ensemble des objets (2) totalement reproduits, à inspecter au niveau d'au moins une caractéristique chaque objet (2) reconnu par comparaison avec un objet de référence, à suivre chaque objet (2) reconnu et à calculer à quel moment et dans quelle position en rotation (2.2) chaque objet (2) reconnu va atteindre une position dans la zone des doigts d'éjection (4), en fonction dudit calcul et du résultat de l'inspection de l'au moins une caractéristique, l'entraînement (5) d'un ou de plusieurs doigts d'éjection(s) (4) étant actionné de manière ciblée, pour éjecter l'objet (2) reconnu.

2. Dispositif (1) selon la revendication 1, comprenant par ailleurs un convoyeur à bande (10) pourvu d'un transfert de bande (10.1), qui est placé au-dessus du bord (3.1) supérieur de la plaque (3) inclinée, de telle sorte que les objets (2) arrivent du convoyeur à bande (10) sur la plaque (3) inclinée.

3. Dispositif (1) selon la revendication 2, **caractérisé en ce que** la vitesse de la bande de convoyage est réglable de telle sorte que la vitesse de transport des objets (2) sur le convoyeur à bande (10) soit inférieure au moins du coefficient 2 à la vitesse de transport moyenne de chaque objet (2) qui se déplace sur la plaque (3) inclinée, du bord (3.1, 3.2) supérieur vers l'inférieur.

4. Dispositif (1) selon l'une quelconque des revendications 1 à 3, **caractérisé en ce qu'**en-dessous du bord (3.2) inférieur de la plaque (3) inclinée est placé un convoyeur à bande (11) supplémentaire, configuré pour évacuer les objets (2) non éjectés.

5. Dispositif (1) selon l'une quelconque des revendications 1 à 4, comprenant par ailleurs un capot de capture (8) s'étendant au moins sur la largeur (3.4) de la plaque (3) inclinée et un convoyeur transversal (9), le capot de capture (8) et le convoyeur transversal (9) étant placés par rapport aux doigts d'éjection (4) de telle sorte que les objets (2) éjectés arrivent soit directement sur le convoyeur transversal (9) ou sur le convoyeur transversal (9) après déviation par le capot de capture (8).

6. Dispositif (1) selon l'une quelconque des revendications 1 à 5, **caractérisé en ce que** l'angle d'inclinaison (3.3) de la plaque (3) inclinée par rapport à l'horizontale s'élève à entre 30° et 40°.

7. Dispositif (1) selon l'une quelconque des revendications 1 à 6, **caractérisé en ce que** la plaque (3) inclinée est constituée d'une matière transparente et sur une face arrière de la plaque est placé un rétroéclairage (12).

8. Dispositif (1) selon la revendication 7, **caractérisé en ce que** le rétroéclairage (12) est configuré pour générer des éclairs d'éclairage à une fréquence qui concorde avec la fréquence d'enregistrement des systèmes d'enregistrement d'images (6) et la génération des éclairs d'éclairage est synchronisée avec les moments d'enregistrement des systèmes d'enregistrement d'images.

9. Dispositif (1) selon l'une quelconque des revendications 1 à 8, **caractérisé en ce que** les angles de vision (6.2) des plusieurs systèmes d'enregistrement d'images (6) dans la direction de la largeur (3.4) de la plaque (3) inclinée se chevauchent de telle sorte que le chevauchement soit supérieur à la longueur des objets (2) qui doivent être inspectés.

10. Dispositif (1) selon l'une quelconque des revendications 1 à 9, **caractérisé en ce que** chaque doigt d'éjection (4) est réalisé du côté extrémité sous la forme d'un levier logé de manière rotative autour d'un axe de rotation (4.3), plat sur une face supérieure, pourvu d'une articulation (4.4) placée sur une face inférieure pour un organe mené (5.1) de l'entraînement (5), en partant de l'axe de rotation (4.3), l'articulation (4.4) étant placée dans la première moitié du levier.

11. Dispositif (1) selon la revendication 10, **caractérisé en ce que** la longueur de chaque levier est adaptée à la longueur des objets (2), de sorte à correspondre au moins à la demi longueur de chaque objet (2) qui doit être inspecté.

12. Dispositif (1) selon l'une quelconque des revendications 1 à 11, **caractérisé en ce que** l'angle de pivotement entre la position de départ (4.1) et la position d'éjection (4.2) de chaque doigt d'éjection (4) est réglable.

13. Dispositif (1) selon l'une quelconque des revendications 1 à 12, **caractérisé en ce que** chaque entraînement (5) comprend un vérin pneumatique (5.2) à double action, pourvu d'un piston et d'une tige de piston (5.3) ainsi qu'un système de commande, le système de commande étant configuré de telle sorte que le piston puisse sortir avec la tige de piston (5.3) à une pression d'air non réduite et que le temps d'activation de la pression d'air soit réglable.
